# EUROPEAN PATENT APPLICATION

(11) **EP 1 871 087 A1**
(43) Date of publication of application: **26.12.2007**
(21) Application number: 06731025.0
(22) Date of filing: 04.04.2006
(51) Int. Cl.: H04N 1/387, G06F 13/00, G06T 1/00, H04N 5/225

(54) **CONTENT DOWNLOADING METHOD AND CONTENT REPRODUCING METHOD**

(30) Priority: 06.04.2005 JP 2005109824
(71) Applicant: Sharp Kabushiki Kaisha, Osaka-shi, Osaka 545-8522 (JP)
(72) Inventor: YAMADA, Hideaki, Urayasu-shi Chiba;2790022 (JP); NAKABAYASHI, Jiro, 1680081 (JP)
(74) Representative: Müller, Frithjof E.
(86) International application number: PCT/JP2006/307077
(87) International publication number: WO 2006/109613

(57) **Abstract**

A method is provided which may download and reproduce contents depending on the performance of an information communication device such as a mobile phone or a PDA. A method for downloading contents from a server containing contents in an information communication device with camera includes: at the information communication device, imaging an image including additional information with said camera, and transmitting the imaged image data to a server; and at the server, extracting additional information from the imaged image data being received, determining the performance of the information communication device based on the imaged image data, selecting contents corresponding to the extracted additional information and depending on said performance of the information communication device, and transmitting the contents to the information communication device.

## Description

### Technical Field

The present invention relates to a method for downloading and reproducing contents in an information communication device such as a mobile phone or a PDA, and particularly, to a method for downloading and reproducing contents depending on the performance of the information communication device.

### Background Art

With the proliferation of the Internet, various studies have been conducted on digital watermarking technology for embedding additional information such as copyright information to digital contents such as images, music or motion images in order to prevent unauthorized copying of the digital contents. However, the digital watermarking technology has not yet been widely adopted to the previously expected usage, since it is not a positive measure to prevent an unauthorized copying by embedding a digital watermark to the contents, but such a passive measure that can merely indicate an unauthorized copying of the contents when it happens.

Meanwhile, recent years have seen significant improvements in performance of potable information communication devices such as mobile phones with camera or PDAs. With the advancement of network environments around the information communication devices, as well as improved performance of cameras attached to these devices and realization of camera control with applications such as Java® applications, it is now possible to perform image processing on images captured from a camera at the information communication devices, or to transmit and receive images to and from a server through a network.

Thus, some companies have announced a technology and method for capturing a printing image embedded with a digital watermark using an information communication device with camera, and extracting the digital watermark from the captured image by an image processing function of the information communication device, and thereby obtaining additional information embedded with that digital watermark through a network. For example, the following Patent Document 1 describes a method for imaging an image including a digital watermark using a mobile phone with camera and transmitting the image to a server to download other contents.
Patent Document 1: JP Patent Publication (Kokai) No. 2004-86457 A

### Disclosure of the Invention

### Problems to be Solved by the Invention

However, regardless of the difference in performance depending on the types of information communication devices, e.g., resolutions of associated cameras, prior art solutions have substantially same functions for extracting additional information from images and obtain merely uniform additional information independent of the performance of such information communication devices. Although it is considered that the higher performance such as resolutions of cameras may enable the extraction of more information from imaged images and also realize the higher functionality, at present, increasingly improved performance of cameras has not been sufficiently utilized for functions which obtain additional information by reading digital watermarks.

Thus, the present invention attempts to provide a method for obtaining additional information by reading digital watermarks and for downloading and reproducing contents based on that additional information, sufficiently utilizing improved camera functions in the information communication devices.

### Means for Solving the Problems

Focusing on a fact that, in information communication devices with camera such as mobile phones or PDAs, the higher the performance in the associated camera, the higher the performance in the device itself, the present inventor has found that it is possible to determine the performance of the information communication device by analyzing image data captured by the camera at that information communication device, and to download contents from a server depending on the performance.

That is, the present invention provides a method for downloading contents from a server containing contents in an information communication device with camera, the method comprising: at the information communication device, imaging an image including additional information with said camera and transmitting the imaged image data to a server; and at the server, extracting additional information from the imaged image data being received, determining the performance of the information communication device based on the imaged image data, selecting contents corresponding to the extracted additional information depending on said performance of the information communication device, and transmitting the contents to the information communication device.

The present invention also provides a method for downloading contents from a server containing contents in an information communication device with camera, the method comprising: at the information communication device, imaging an image including additional information with said camera, extracting additional information from the imaged image data, and transmitting said imaged image data and the extracted additional information to a server; and at the server, determining the performance of the information communication device based on the imaged image data being received, selecting contents corresponding to the additional information received depending on said performance of the information communication device, and transmitting the contents to the information communication device.

The present invention also provides a method for reproducing contents in an information communication device with camera containing contents, wherein an image including additional information is imaged with said camera, additional information is extracted from the imaged image data, the performance of the information communication device is determined based on the imaged image data, and contents corresponding to the extracted additional information is selected and reproduced depending on said performance of the information communication device.

In the method for downloading or reproducing contents according to the present invention, said image including additional information is embedded with the additional information in the form of a digital watermark.

In the method for downloading or reproducing contents according to the present invention, said image including additional information includes a display in which imaging data of the image may differ depending on the performance of the camera, and the performance of the information communication device is determined based on a portion related to the display of the imaged image data.

In the method for downloading or reproducing contents according the present invention, said display in which imaging data of the image may differ depending on the performance of the camera is embedded in said image as layered digital watermarks.

In the method for downloading or reproducing contents according to the present invention, the performance of the information communication device is determined based on a size of the imaged image data.

### Advantages of the Invention

As described above, according to the method for downloading and reproducing contents of the present invention, it is possible to image, e.g., a printing, with which layered digital watermarks are embedded, with a camera on the information communication device, e.g., to determine the performance of the camera from the imaged image data, thereby providing differentiated services that enable downloading of different sorts of contents depending on the grade of the information communication device.

The differentiation method for services includes the following specific examples.

- When the information communication device provides a low performance, ringtones can only be downloaded, whereas it provides a high performance, even promotion videos can be downloaded.

- When the information communication device provides a low performance, "100" bonus points can be obtained, whereas it provides a high performance, "1000" bonus points can be obtained.

- When the information communication device provides a low performance, only concert information is noticed, whereas it provides a high performance, the number of advance reservation for the concert is noticed in addition to such information.

- Provided that the additional information is related to a product for sale, and when the information communication device provides a low performance, only information (text) for that product is noticed, whereas it provides a high performance, in addition to provision of such product information, a transition is made to a Web page in which the product is sold.

- Provided that the additional information is related to, e.g., site information, and when the information communication device provides a low performance, route information is noticed only by character information, whereas it provides a high performance, graphical information such as a map is noticed.

- Provided that the additional information is related to a plurality of stores, and when the information communication device provides a low performance, only store information/URLs for some of these stores will be available, whereas it provides a high performance, every store information/URLs for all of these stores will be available as well as the associated store information/URLs.

- With respect to fees for publication of an advertisement embedded with a digital watermark, etc., a higher fee is set for advertisement images from which information communication devices with lower performance can extract additional information, whereas a lower fee is set for advertisement images from which only information communication devices with higher performance can extract additional information.

### Brief Description of the Drawings

Figure 1 is a conceptual diagram illustrating how contents can be downloaded in accordance with a first embodiment of the invention;
Figure 2 is a sequence diagram illustrating an operational flow between a user, an information communication device, and a server in carrying out a method for downloading and reproducing contents of the first embodiment;
Figure 3 is a diagram illustrating a layered encoding of digital images;
Figure 4 is a conceptual diagram illustrating how contents can be downloaded in accordance with a second embodiment of the present invention;
Figure 5 is a sequence diagram illustrating an operational flow between a user, an information communication device, and a server in carrying out the method for downloading and reproducing contents of the second embodiment; and
Figure 6 is a sequence diagram illustrating an operational flow between a user and an information communication device in carrying out a method for reproducing contents of a third embodiment.

### Best Mode for Carrying Out the Invention

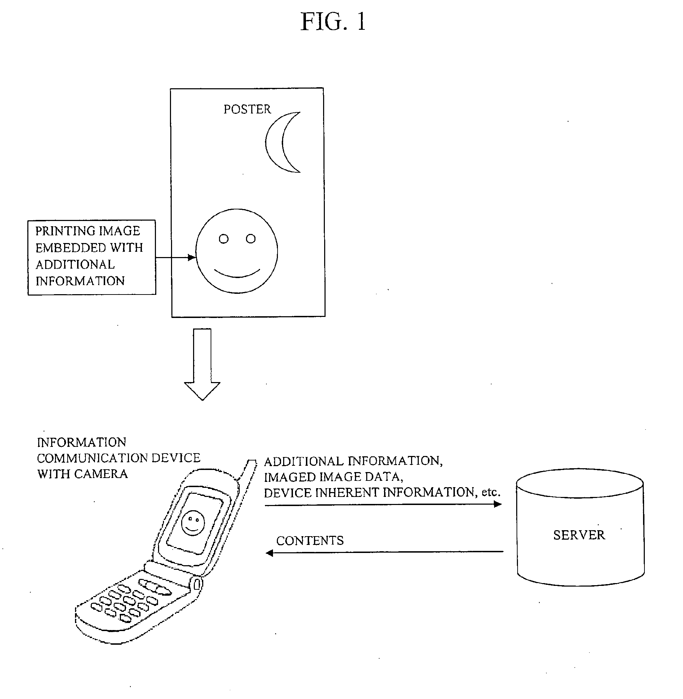

Now, a best mode for carrying out a method for downloading and reproducing contents of the present invention is described in detail below with reference to the accompanying drawings. Figures 1 to 6 illustrate embodiments of the present invention, in which like reference numerals designate like parts and basic configurations and operations are identical to each other.

Hereinbelow, the term "contents" refers to digital data such as a still image, a motion image, music, audio, or text. In addition, the term "an information communication device with camera" includes, in addition to a common mobile phone with camera, a PDA (Personal Digital Assistance) and a personal computer connected to or equipped with a camera as well as a digital camera with a communication function, etc. Further, other means may be employed instead of the camera which can image and capture an image, including an image scanner or a barcode reader.

### First Embodiment

A first embodiment of a method for downloading and reproducing contents in accordance with the present invention is described below. Figure 1 is a conceptual diagram illustrating how contents can be downloaded in accordance with this embodiment. In Figure 1, this embodiment relates to a method wherein an information communication device with camera communicates with a server and downloads contents therefrom. The information communication device with camera is connected to the server via a communication line such as the Internet. It is assumed that the server comprises a content database (not shown) that contains contents for distribution to the information communication device. The information communication device with camera may display on a screen, e.g., an image that is imaged with the camera or contents that is downloaded from the server.

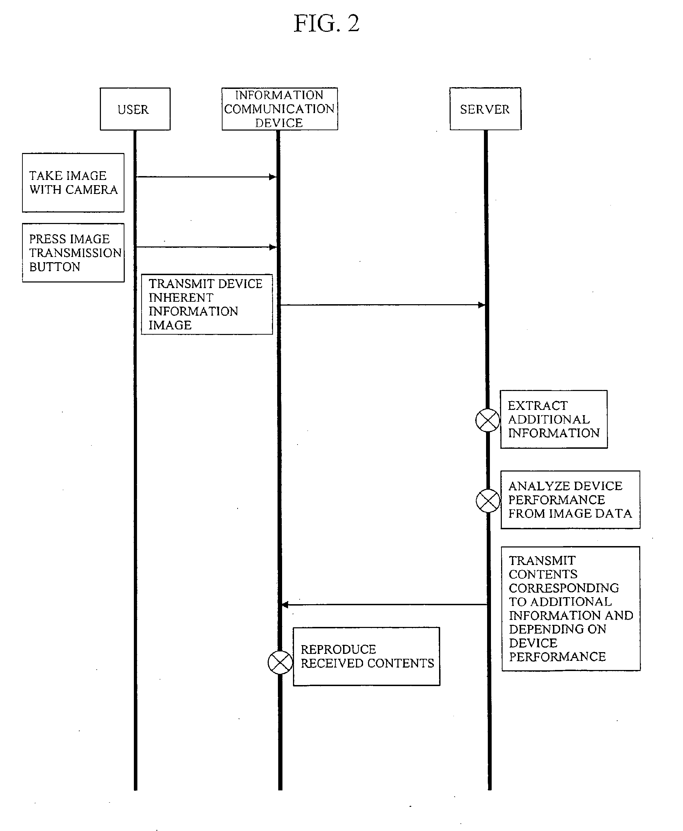

Figure 2 is a sequence diagram illustrating an operational flow between a user, an information communication device, and a server in carrying out the method for downloading and reproducing contents of this embodiment. In Figure 2, the user of the information communication device first operates the camera on the information communication device to image an image. The image for imaging here may be an image including a poster as illustrated in Figure 1, a book, a magazine, an advertisement printed on a T-shirt, and a special section, or an image displayed on a display. It is assumed that these images include additional information for the contents in the form of a digital watermark as well as a display within, or adjacent to, the image that enables identification of the performance of the camera on the information communication device. Specifically, the display includes minute characters, patterns or color bars, wherein the image data of that display imaged and digitized with the information communication device may differ depending on the performance or resolutions of the camera on the information communication device. For example, the higher resolutions provided by the information communication device with camera, the more concise image data capturing minute patterns of the display could be generated.

After imaging of the image with the information communication device, and upon an image transmission button pressed by the user, the information communication device transmits digital data of the image that is imaged with the camera to the server. At this moment, the information communication device may transmit inherent information of the device itself (e.g., information specifying the manufacturer, device type or specification of the device) to the server together with the above-described image data. Upon receipt of the image data from the information communication device, the server extracts additional information that is embedded in the image in the form of a digital watermark, while analyzing the image data received to determine the performance of the information communication device. If inherent information of the information communication device is obtained, the determination may be made using such information. Then, the server retrieves contents that correspond to the additional information received from the content database depending on the performance of the information communication device, and transmits the contents to the information communication device.

Here, examples of the additional information embedded in the image include an URL, an encryption key and content identification information. In addition, an example of the method for analyzing the image data received to determine the performance of the information communication device may extract a resolution of the image from a portion of the minute characters, patterns or color bars that is included in the above-described image and determine the performance of the information communication device based on such resolution. Other examples include to encode a digital image before the printing of a printing image with a layered encoding, and to embed a different watermark in each layer. Upon the digital image being imaged and captured with the camera on the information communication device, when the camera has higher resolutions, up to a high-resolution and high-level digital image can be reproduced, whereas the camera has lower resolutions, up to a low-level digital image can only be reproduced. Consequently, an information communication device that could extract larger amount of embedded information can be determined to provide higher performance.

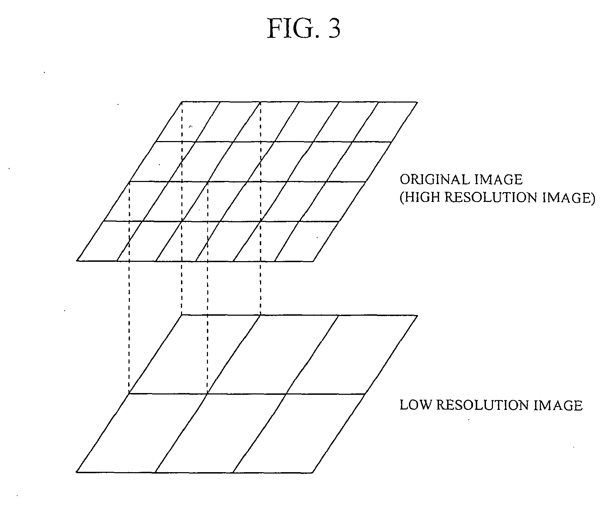

Referring to Figure 3, the layered encoding of digital images is generally described below. In encoding, the resolution of the original image is converted to generate an image of lower resolution than the original. Then, an image of lower resolution is first encoded, followed by another encoding of the difference between an image of higher resolution and the image of lower resolution. This results in the presence of information for the image of lower resolution closer to the beginning of the codes, and information for the image of higher resolution closer to the end of the codes. In decoding, the image of lower resolution is first decoded, followed by another decoding of the difference, which enables reproduction of the original image of higher resolution from the difference and the previously decoded image. Although the description has been made to the two-stage layered encoding, it is also possible to provide a multi-stage encoding by repeatedly performing layered encoding on the image of low resolution. The layered encoding is employed in various international standards such as JBIG, JPEG or JPEG2000, because of its advantages that enable review of a whole image at an early stage of the image being received and display of images on a display with low resolutions depending on the display's performance.

Without the above-mentioned mechanism provided in advance, the server may determine the performance of the information communication device based on the size information of the received image. In general, since the images captured with a camera on an information communication device become larger in size for the higher resolutions of the camera, the performance of the information communication device may be measured from the size of the received image.

In this way, the information communication device that receives contents from the server performs reproduction of the contents. In accordance with the above method, there will be no such situation where a failure of reproduction of the received content or any other reproduction failure occurs due to the shortage of performance or the like, since suitable contents for the performance of the device itself are downloaded to the information communication device.

### Second Embodiment

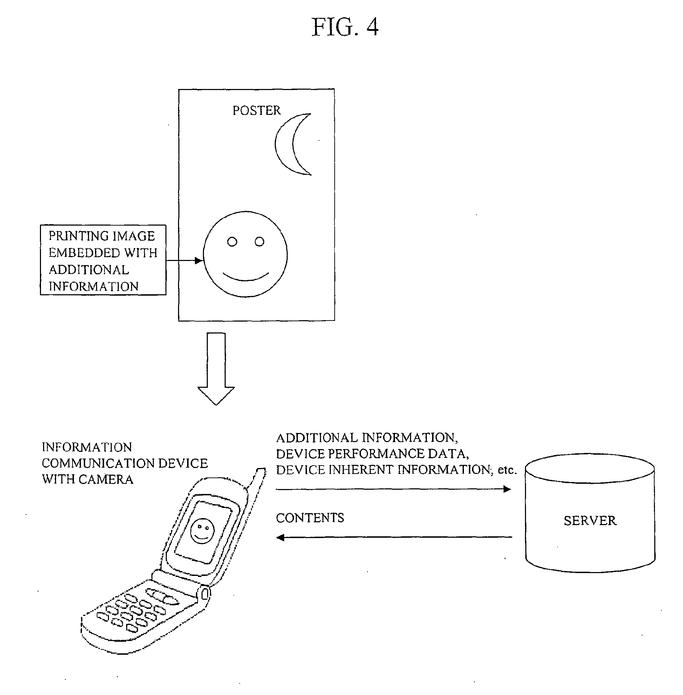

A second embodiment of the method for downloading and reproducing contents in accordance with the present invention is described below. Figure 4 is a conceptual diagram illustrating how contents can be downloaded in accordance with this embodiment. In Figure 4, this embodiment relates to a method wherein an information communication device with camera communicates with a server and downloads contents therefrom. The information communication device with camera is connected to the server via a communication line such as the Internet. It is assumed that the server comprises a content database (not shown) that contains contents for distribution to the information communication device. The information communication device with camera may display on a screen, e.g., an image that is imaged with the camera or contents that are downloaded from the server.

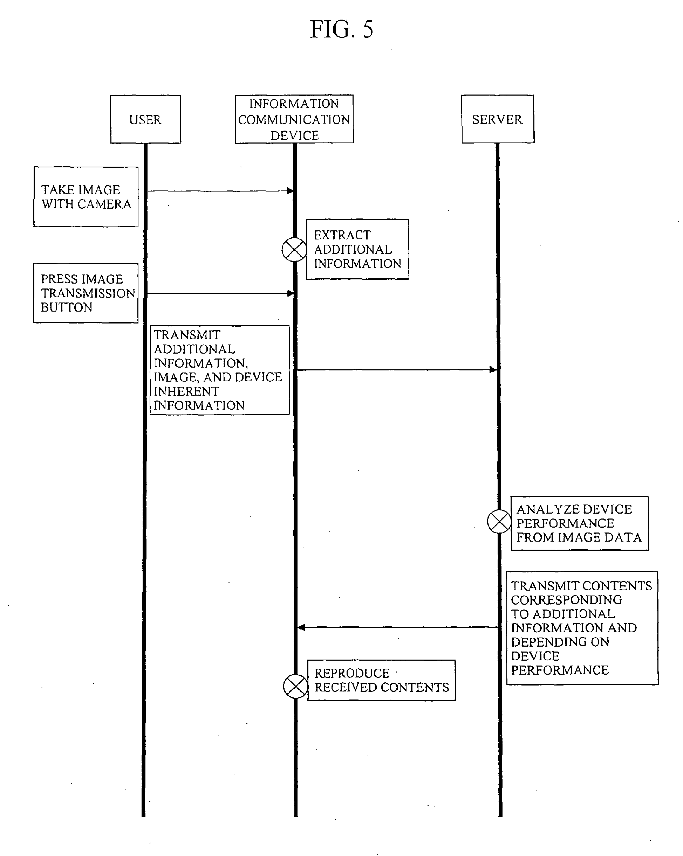

Figure 5 is a sequence diagram illustrating an operational flow between a user, an information communication device, and a server in carrying out the method for downloading and reproducing contents of this embodiment. In Figure 5, the user of the information communication device first operates the camera on the information communication device to image an image. It is assumed that the image for imaging here is similar to that of the first embodiment and that it includes a display which enables identification of the performance of the camera on the information communication device. Subsequently, the information communication device extracts additional information that is embedded in the imaged image in the form of a digital watermark. Then, upon an image transmission button pressed by the user, the information communication device transmits digital data of the image that is imaged with the camera and the extracted additional information to the server. In addition to this, inherent information of the device itself may be transmitted to the server.

Upon receipt of the additional information and the image data from the information communication device, the server analyzes the image data to determine the performance of the information communication device. In addition, if inherent information of the information communication device is obtained, the determination may be made for the performance of the information communication device using such information. Then, the server retrieves contents that correspond to the additional information received from the content database depending on the performance of the information communication device, and transmits the contents to the information communication device. In this respect, the method for determining the performance of the information communication device is similar to that of the first embodiment.

In this way, the information communication device that receives contents from the server performs reproduction of the contents. In accordance with the above method, there will be no such situation where a failure of reproduction of the received content or any other reproduction failure occurs due to the shortage of performance or the like, since suitable contents for the performance of the device itself are downloaded to the information communication device.

### Third Embodiment

While the first and second embodiments described above achieve the method for downloading and reproducing contents of the present invention by communications between the mobile phone with camera and the server, a third embodiment of the present invention achieves similar functions in a single mobile phone with camera. In this embodiment, although a similar information communication device with camera is used to the first and second embodiments, it is assumed that the information communication device contains contents in advance.

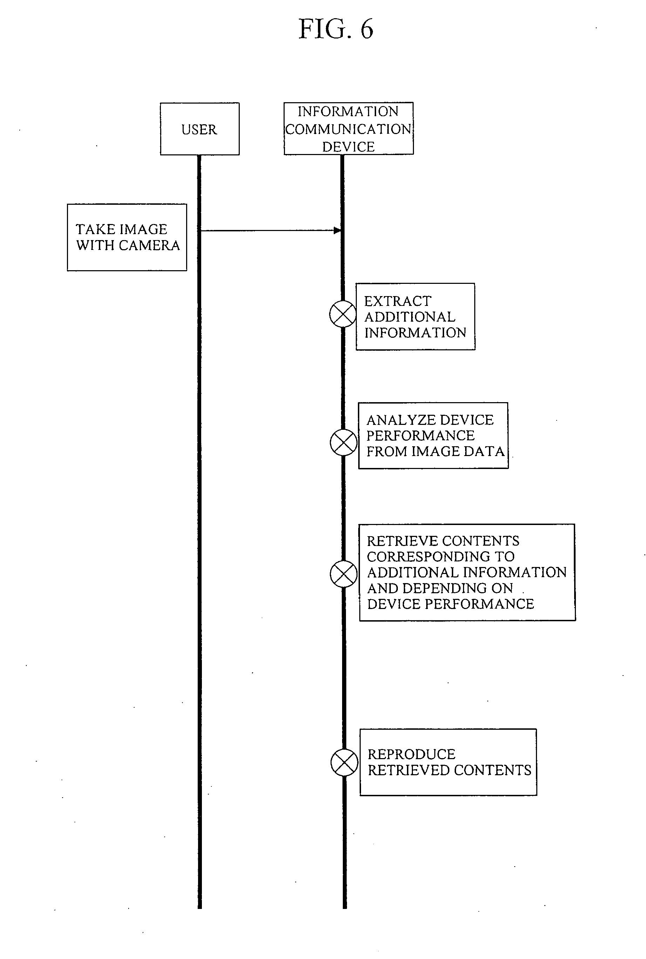

As shown in Figure 6, in this embodiment, when an image is imaged by a user operating a camera on the information communication device, the information communication device extracts additional information that is embedded in the imaged image in the form of a digital watermark and analyzes the imaged image data to determine the performance of the device itself. In addition, inherent information of the device itself may be used to determine the performance of the device itself. Then, the information communication device retrieves contents from its contained contents which correspond to the additional information depending on the performance of the information communication device, and reproduces such contents.

In this way, since the information communication device may reproduce suitable contents among those contained in the device itself that are specified by digital watermarks depending on the performance of the device itself, there will be no such situation where a failure of reproduction of the specified content or any other reproduction failure occurs due to the shortage of performance or the like.

Although specific embodiments have been described for the method for downloading and reproducing contents of the present invention, the present invention is not intended to be limited to these embodiments. One skilled in the art can make various modifications and improvements to the configurations and features of the invention in accordance with each embodiment described above or other embodiments, without departing from the spirit of the present invention.

### Industrial Applicability

The method for downloading and reproducing contents of the present invention has industrial applicability because it is carried out using hardware resources such as mobile phones or servers to perform an information processing, i.e., downloading and reproducing of contents in a concrete manner.

## Claims

1. A method for downloading contents from a server containing contents in an information communication device with camera, the method comprising:
at the information communication device, imaging an image including additional information with said camera and transmitting the imaged image data to a server; and
at the server, extracting additional information from the imaged image data being received, determining the performance of the information communication device based on the imaged image data, selecting contents corresponding to the extracted additional information depending on said performance of the information communication device, and transmitting the contents to the information communication device.

2. A method for downloading contents from a server containing contents in an information communication device with camera, the method comprising:
at the information communication device, imaging an image including additional information with said camera, extracting additional information from the imaged image data, and transmitting said imaged image data and the extracted additional information to a server; and
at the server, determining the performance of the information communication device based on the imaged image data being received, selecting contents corresponding to the additional information received depending on said performance of the information communication device, and transmitting the contents to the information communication device.

3. A method for reproducing contents in an information communication device with camera containing contents, wherein
an image including additional information is imaged with said camera, additional information is extracted from the imaged image data, the performance of the information communication device is determined based on the imaged image data, and contents corresponding to the extracted additional information are selected and reproduced depending on said performance of the information communication device.

4. The method for downloading and reproducing contents according to any one of claims 1 to 3, wherein
said image including additional information is embedded with the additional information in the form of a digital watermark.

5. The method for downloading and reproducing contents according to any one of claims 1 to 4, wherein
said image including additional information includes a display in which imaging data of the image may differ depending on the performance of the camera, and the performance of the information communication device is determined based on a portion related to the display of the imaged image data.

6. The method for downloading and reproducing contents according to claim 5, wherein
said display in which imaging data of the image may differ depending on the performance of the camera is embedded in said image as layered digital watermarks.

7. The method for downloading and reproducing contents according to any one of claims 1 to 6, wherein
the performance of the information communication device is determined based on a size of the imaged image data.
